(19) Europäisches Patentamt
European Patent Office
Office européen des brevets

(11) Publication number: **0 529 179 A1**

# (12) EUROPEAN PATENT APPLICATION

(21) Application number: **91870131.9**

(51) Int. Cl.$^5$: **C08K 5/18**, C08L 21/00

(22) Date of filing: **26.08.91**

(43) Date of publication of application:
**03.03.93 Bulletin 93/09**

(84) Designated Contracting States:
**BE**

(71) Applicant: **MONSANTO EUROPE S.A.**
**Avenue de Tervuren 270-272 Letter Box 21**
**B-1150 Brussels(BE)**

(72) Inventor: **Vandevelde, Oscar Ghislain Joseph**
**Grandru 12**
**6649 Vaux-sur-Sûre(BE)**
Inventor: **Moniotte, Philippe Gerard**
**Rue Saint Martin, 21**
**4217 Héron(BE)**

(74) Representative: **Ernst, Hubert et al**
**Monsanto Services International S.A., Patent Department, Avenue de Tervuren 270-272, Letter Box No. 21**
**B-1150 Brussels (BE)**

## (54) Rubber compositions having reduced staining and discoloration.

(57) Rubber compositions are described having desirable properties inclusive of reduced stain and discoloration. The compositions contain in addition to rubber and conventional additives a low level of specific N,N-disubstituted alkoxyanilines and are most preferably substantially free of phenylene diamine anti-ozonants.

EP 0 529 179 A1

This invention relates to rubber compositions having desirable properties inclusive of reduced staining and discoloration. These benefits are achieved through the use of additive levels of a selected class of N-disubstituted alkoxyanilines. The rubber compositions, in addition to the reduced staining and discoloration benefits, show improved flex properties and thus longer fatigue life. The claimed compositions herein are preferably substantially free of phenylenediamine anti-ozonants.

The prior art relative to rubber compositions is crowded and diverse and has accumulated over a long period of time. Much effort has been spent towards improving physical properties including the prevention of staining and discoloration, flexlife, fatigue, resistance to oxidation and crack development by ozone.

US patent 3.466.248 discloses anti-ozonant compositions for use in rubber containing specific phenylene diamine derivatives in combination with a further substituted compound inclusive of N-dialkyl alkoxyaniline. The diamine component represents from 50% to 90% and the alkoxyaniline from 50% to 10% of a mixture of these components.

GB-patent 852.932 relates to rubber chemicals which are capable of promoting effective antidegradant and anti-oxidant properties in rubber. Suitable rubber chemicals can be represented by N-monosubstituted alkoxyanilines. The rubber chemicals provide anti-ozonant properties and they do not seriously discolor light-colored rubber stocks.

It is a major object of this invention to make available rubber stocks having substantially non-staining properties or at least a substantially reduced tendency to develop stain.

It is another major object of this invention to formulate rubber compositions which are not discoloring or which have a substantially reduced tendency to be subject, even under adverse conditions, to discoloration.

It is still a further object of this invention to provide rubber compositions having good antifatigue properties with no significant stain and discoloration properties.

A further aim of the invention is to provide rubber compositions having good anti-oxidant and valuable anti-ozonant properties while maintaining the non-staining and non-discoloring properties of the rubber compositions.

The foregoing and other desirable benefits can now be secured from rubber compositions containing additive levels of a narrowly defined class of alkoxy anilines. In a very preferred execution the rubber compositions of the invention are substantially free of phenylene diamine anti-degradants.

This invention is, in part, based on the discovery that rubber compositions can be formulated having a cumulative series of desirable properties, inclusive of non-staining, non-discoloring, antifatigue, anti-ozonant and anti-oxidant properties. Such rubber compositions basically comprise an additive level, generally from 0.1 to 10 phr, of a substituted alkoxyaniline having the general formula

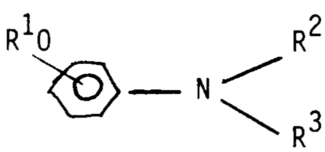

wherein $R^1O$ is an alkoxy substituent in the benzene nucleus, $R^1$, $R^2$ or $R^3$ is independently selected from straight or branched alkyl groups having from 1 to 20 carbon atoms, the chain of carbon atoms being possibly interrupted by ether or sulphide linkages, cycloalkyl and cycloalkenyl having from 4 to 8 carbon atoms, said cyclic structure optionally containing an oxygen atom in between two carbon atoms, alkenyls and alkynyls having from 2 to 20 carbon atoms in the chain structure, aralkyls containing 7 or more carbon atoms, or combinations thereof. It was also found that the inventive benefits, particularly non-staining and non-discoloring are readily available provided the rubber compositions are substantially free of N,N'-substituted-p-phenylene diamines. Subadditive levels of such phenylene diamines are not necessarily incompatible with the procurement of the inventive benefits and such diamines shall preferably represent less than 10% by weight of the sum of the amounts of the substituted alkoxy- aniline and the phenylenediamine.

The substituents $R^1$, $R^2$ and $R^3$, which can be identical or different, can be selected from a variety of chemical moieties. Such substituents can be selected from straight or branched alkyl groups having from 1 to 20, preferably 1 to 8 carbon atoms, whereby the carbon chain can be optionally interrupted by ether or sulfide linkages. The R substituents can also be selected from cycloalkyl and cycloalkenyl groups having from 4 to 8 carbon atoms and which cyclic groups can optionally contain an oxygen atom inbetween carbon atoms. The R substituents can also be selected from alkenyls and alkynyls having from 2 to 20, preferably 2 to 12 carbon atoms in the chain structure, and from aralkyls containing 7 or more carbon atoms.

Combinations of the foregoing substituents can be made and frequently represent preferred substituents.

$R^1$ is most preferably represented by $C_1$ to $C_6$ alkyl groups such as methyl, ethyl, butyl and hexyl. Preferred $R^2$ and $R^3$ moieties can be selected from cyclohexyl and, straight or branched alkyl, groups having from 1 to 8 carbon atoms.

Preferred alkoxyaniline species herein include :

N-methyl-N-cyclohexyl-4-hexyloxy-aniline.
N-methyl-N-1,3-dimethylbutyl-4-ethoxy-aniline
N-methyl-N-1,3-dimethylbutyl-4-hexyloxy-aniline
N-methyl-N-cyclohexyl-4-hexyloxy-aniline
N-methyl-N-cyclohexyl-4-butoxy-aniline
N-methyl-N-di(1,3-dimethylbutyl)-4-ethoxy-aniline

More preferred species were found to be as follows :

N-butyl-N-cyclohexyl-4-ethoxy-aniline
N-ethyl-N-cyclohexyl-4-ethoxy-aniline
N-butyl-N-1,3-dimethylbutyl-4-ethoxy-aniline
N-butyl-N-1,3-dimethylbutyl-4-butoxy-aniline
N,N-Di(isopropyl)-4-methoxyaniline
N,N-Di(isopropyl)-4-ethoxyaniline
N,N-Di(1,3-dimethylbutyl)-4-methoxyaniline
N,N-Di(1,3-dimethylbutyl)-4-ethoxyaniline
N,N-Di(isobutyl)-4-methoxyaniline
N,N-Di(isobutyl)-4-ethoxyaniline

The aromatic nucleus of the alkoxyanilines can be substituted optionally by additional group(s) which do not interfere with the obtaining of the beneficial properties of the inventive compositions herein. Examples of suitable additional groups include straight or branched $C_1$-$C_6$ alkyl groups and $C_1$-$C_6$ alkoxy radicals.

The essential substituted alkoxyaniline component can be represented by the free-base or by salts formed by the addition of acids to the alkoxyanilines. For example, carboxylic acids such as stearic or acetic acids or inorganic acids such as hydrochloric acid can be used to that effect.

The alkoxyaniline generally represents from 0.1 to 10, preferably from 0.5 to 6, more preferably from 1 to 4 phr. where phr means "part per hundred parts of rubber".

The rubber compositions herein are preferably substantially free of N,N'-substituted-p-phenylenediamines as e.g. known from US patent 3.466.248. For any practical purposes said substituted phenylenediamines can be tolerated at a level which is less than 10%, preferably less than 4%, by weight of the sum of the amounts of the substituted alkoxyaniline and the phenylenediamine.

The substituted alkoxyanilines are especially effective in compositions in which the rubber is unsaturated such as cis-polyisoprene, either natural or synthetic and other rubbers, including for example poly-1,3-butadiene, copolymers of 1,3-butadiene with other monomers, for example styrene, acrylonitrile, isobutylene and methyl methacrylate, ethylene-propylene-diene terpolymers (EPDM), functionalised EPDM such as maleic acid-grafted EPDM, and halogen-containing rubbers such as chlorobutyl, bromobutyl and chloroprene rubbers. In other instances, the rubber polymer in a rubber composition of the invention can be a blend of two or more of the rubbers exemplified above, for example a blend of natural rubber and styrene-butadiene rubber. Particularly preferred are blends of rubber for use in the side-walls of tires.

The alkoxyanilines as described in more detail herein- before, are effective in improving and upgrading a broad spectrum of physical properties of the rubber vulcanisate. They are particularly useful in fully compounded rubber stocks containing a reinforcing agent and/or a filler, a vulcanising agent, and, a conventional process aid, such as a processing oil or mixtures of the like aids, and accelerators. Conventionally used fillers include carbon black, china clay, titanium oxide, talc, silica and others as may be required to achieve specific qualities, properties and benefits of the rubber vulcanisate which typically are used in amounts of from 30 to 100 parts by weight per 100 parts by weight of rubber. Other additives include, for example, zinc oxide, which may be used in an amount of, for instance, from 2 to 10 parts by weight per 100 parts by weight of rubber;

stearic acid at a level of, for instance, from 0.5 to 2 parts by weight per 100 parts by weight of rubber and anti-oxidants. Other reinforcing agents and/or fillers may be used, for example silica, and the rubber stocks may also contain metal oxide activators other than zinc oxide, for example magnesium oxide, prevulcanisation inhibitors, for instance N-cyclohexyl-thiophthalimide, and post-vulcanisation stabilisers and rubber-metal bonding promoters, for example the thiosulphate derivatives described in EP-B-0 070 143 and EP-B-109 955.

The alkoxyanilines can be incorporated into the rubber, together with additives, except the vulcanising agent and the vulcanisation accelerator, during a first stage mixing, using, for example, an internal mixer or a mill. In an alternative procedure, the anilines can be incorporated along with the vulcanising agent and accelerator during a second stage mixing. If sulphur is used as the vulcanising agent, the amount is typically in the range from 0.3 to 9 parts by weight per 100 parts by weight of rubber.

Accelerators which can be used include the benzothiazole-2-sulphenamides, for instance N-isopropyl-benzothiazole-2-sulphenamide, N-tert-butyl-benzothiazole-2-sulphenamide, N-cyclohexylbenzo-thiazole-2-sulphenamide, N,N-dicyclohexylbenzothiazole-2-sulphenamide and 2-(morpholinothio)benzothiazole. In the compositions of the invention, these are typically used in amounts of from 0.3 to 6 parts by weight per 100 parts by weight of rubber depending on the nature of the rubber, the amount of sulphur, and the properties required in the cured rubber. Other curing systems using sulphur donors, for example dimorpholine disulphide, can be used.

As indicated above, the alkoxyanilines herein can be incorporated into the rubber by conventional mixing procedures. In the processing of natural rubber it is customary to subject the raw rubber to a mastication before the introduction of any additives.

The invention is illustrated by the following specific embodiments.

For the evaluation of the alkoxyanilines of the invention, control stocks of the following composition were employed:

| PARTS BY WEIGHT | | | |
|---|---|---|---|
| | I | II | III |
| Natural Rubber SMR L | 100 | 50 | 100 |
| Carbon black N330 | 50 | - | 50 |
| Zinc oxide | 5 | 5 | 5 |
| Stearic acid | 2 | 1 | 2 |
| Process oil | 3 | - | 3 |
| Santocure® MOR (1) | 0.7 | - | - |
| Sulphur | 2.5 | 2.0 | 2.5 |
| EPDM Terpolymer | - | 25 | - |
| SBR 1502 | - | 25 | - |
| Talc | - | 20 | - |
| China clay | - | 30 | - |
| Titanium dioxide | - | 50 | - |
| Magnesium oxide | - | 0.5 | - |
| Ultramarine Blue | - | 0.2 | - |
| Santocure® NS (2) | - | 1 | 0.6 |
| Santogard® PVI (3) | - | - | 0.05 |

(1) N-2-benzothiazolylthiomorpholine
(2) N-2-benzothiazolylthio-t-butylamine
(3) N-Cyclohexylthiophthalimide

For masterbatches I and III the natural rubber was pre-masticated before the addition of the other ingredients to a viscosity of about 60 Mooney units ML (1+4) at 100°C (ISO R289).

In preparing masterbatches I and III in a laboratory scale BR Banbury internal mixer, the ingredients, except the sulphur and accelerator, were incorporated in accordance with the following schedule at the intervals shown starting with he premasticated rubber at time zero.

| Time (min.) | Added ingredients |
|---|---|
| 0 | Rubber |
| 1 | Half of N330 and zinc oxide |
| 2.5 | Half of N330 + other ingredients, except sulphur and accelerator |
| 4 | Sweep |
| 5 | Dump (ca. 145°C) |

The alkoxyaniline test compound (2 phr for masterbatch I; 3 phr for masterbatch III) was added, along with the sulphur and accelerator, on a two roll mill at 70 ° C.

For masterbatch II, the EPDM was pre-blended with the SBR 1502 in an internal mixer, the Mooney viscosity of the blend was measured and natural rubber was separately pre-masticated to the same viscosity. These two gum rubbers were blended, other ingredients were added in an internal mixer, a Banbury size OOC, along with alkoxyaniline test compound at 2 phr, or 3 phr.

Tensile strength and modulus were measured as described in ISO 37; fatigue life in kc to failure at 100% extension as described by R.C. Ayerst, D.G.Lloyd, E.R. Rodger, DKG Meeting, Wiesbaden, May 1971. Contact stain and discolouration were measured as described in ISO 3865 with a reflectance spectrometric method or by means of a visual examination, rated on a scale from zero (no stain or discoloration) to 10 (dark brown/black). Ozone resistance was judged on a scale from 10 (no initial cracks or cut of the rubber surface), through intermediate stages of cracking, finally to zero rating (breakage of the sample) when the rubber test pieces were flexed on a Ross flexing apparatus described in ASTM D 1502, for the periods of time noted in an atmosphere of air in which the ozone concentration had been augmented to 15 parts per hundred million (pphm) at 25 ° C.

EXAMPLE 1

The listed compounds below were incorporated into masterbatch I as described above at a level of 2 phr and samples were vulcanised at 141 ° C for 25 minutes. Results of testing performed on the rubber vulcanisate are shown in table 1.

1. None (control)
2. N-butyl-N-cyclohexyl-4-ethoxyaniline
3. N-cyclohexyl-N-methyl-4-ethoxyaniline
4. N,N-Di(cyclohexyl)-4-hexyloxyaniline

TABLE 1

| Test mixture number: | 1 | 2 | 3 | 4 |
|---|---|---|---|---|
| Tensile Strength (MPa) | | | | |
| (a) unaged | 28.0 | 28.3 | 28.1 | 27.0 |
| (b) aged 10 days at 85°C in air | 12.4 | 21.6 | 22.1 | 21.3 |
| Residual tensile Strength (%) after ageing | 44 | 76 | 79 | 79 |
| Elongation at Break | | | | |
| (a) unaged | 527 | 547 | 518 | 500 |
| (b) aged 10 days at 85°C in air | 251 | 319 | 303 | 336 |
| Fatigue life (kc) | 54 | 107 | 101 | 100 |

The results of Table 1 show that the N,N-disubstituted alkoxyanilines protect natural rubber against air oxidation in terms of retained tensile strength and elongation at break and they have a fatigue life substantially better than that of the control (N° 1 in Table).

EXAMPLE 2

The compounds below were incorporated into Masterbatch II as described above, each at a level of 2 phr, and samples were vulcanised at 180° for six minutes.

1. None (control)
2. Santowhite® Powder (Note 1)
3. Santoflex® 13 (Note 2)
4. N,N-Di(cyclohexyl)-4-hexyloxyaniline
5. N-Butyl-N-cyclohexyl-4-ethoxyaniline
6. N-cyclohexyl-N-methyl-4-ethoxyaniline

(Note 1) Santowhite® Powder is the commercial antidegradant 4,4'-butylidenebis(6-t-butyl-3-methylphenol).

(Note 2) Santoflex®13 is N-(1,3-dimethylbutyl)-N'-phenyl-p-phenylene diamine.

TABLE 1

| Discoloration | 1 | 2 | 3 | 4 | 5 | 6 |
|---|---|---|---|---|---|---|
| L | 90.9 | 90.2 | 43.5 | 88.6 | 89.7 | 89.2 |
| b | 0.9 | 2.0 | 18.0 | 4.2 | 2.9 | 3.9 |

The discoloration of the white rubber stock is described in terms of L and b, in Table 1 which have been measured with the aid of a HUNTER colorimeter; where L (lightness) varies between 100 for perfect white to zero for black and refers to diffused light over all the visible spectrum; b expresses the colour of the diffused light along an axis on which positive values (as here) indicate a trend to yellow, and negative values would indicate a trend to blue. Thus the N-disubstituted alkoxyanilines, Nos 4, 5, and 6, have only a slight tendancy to discolour : in lightness they are very close to the control (N° 1) and there is little yellowing. Thus they behave similarly to the commercial antidegradant (N° 2) which is known not to discolour white rubber stocks to any significant extent. Compared against the other commercial antidegradant (N° 3) the alkoxyanilines of the invention are vastly superior in terms of non-discolouration.

EXAMPLE 3

The alkoxyanilines or commercial antidegradants of Table 3, each at 3 phr, were incorporated into masterbatches II & III as described above, and samples were vulcanised at 141°C for a time which corresponds to $t'_c90$ in accordance with ISO 3417 (measurement of vulcanisation characteristics with the oscillating disc curemeter).

Thus in masterbatch III the alkoxyanilines in accordance with the invention provide superior fatigue lives to those of the control (no antidegradant) or the commercial antidegradant (Note 1). In addition, the alkoxyanilines provide a degree of ozone resistance.

Importantly, besides the above properties, the alkoxyanilines in masterbatch III either do not stain by the contact procedure described above or only in a minor way : thus they are generally superior in this respect to the phenolic antidegradant (Note 1) and vastly superior to the para-phenylene diamine antidegradant (Note 2).

Similarly, the alkoxyanilines of the invention, at 3 phr, in masterbatch III mostly so not discolor unlike the para-phenylene diamine at the same level.

TABLE 3

| MASTERBATCH | III | III | III | II |
|---|---|---|---|---|
| | Fatigue live in kc | Anti-ozonant Rating | Contact stain | Discoloration |
| N-Disubstituted-4-alkoxyaniline | | Ross Flexing for 120 h | Rating; after UV-irradiation 24 h. | |
| N-butyl-N-cyclohexyl-4-ethoxy | 143 | 5 | 0 | 0 |
| N-hexyl-N-1,3-dimethylbutyl-4-butoxy | 111 | 4 | 0 | 0 |
| N-hexyl-N-cyclohexyl-4-ethoxy | 137 | 5 | 0 | 0 |
| N-ethyl-N-cyclohexyl-4-ethoxy | 134 | 5 | 0 | 0 |
| N-methyl-N-cyclohexyl-4-ethoxy | 120 | 5 | 3 | 3 |
| N-methyl-N-1,3-dimethylbutyl-4-ethoxy | 117 | 4 | 2 | 2 |
| N-butyl-N-1,3-dimethylbutyl-4-ethoxy | 125 | 4 | 0 | 0 |
| N-methyl-N-cyclohexyl-4-butoxy | 139 | 4 | 1 | 2 |
| N-butyl-N-1,3-dimethylbutyl-4-butoxy | 107 | 4 | 0 | 0 |
| N-methyl-N-cyclohexyl-4-hexyloxy | 121 | 4 | 0 | 1 |
| N-methyl-N-1,3-dimethylbutyl-4-hexyloxy | 112 | 4 | 0 | 1 |
| N-butyl-N-1,3-dimethylbutyl-4-hexyloxy | 118 | 3 | 0 | 2 |
| N-methyl-N-1,3-dimethylbutyl-4-butoxy | 127 | 5 | 1 | 0 |
| N-butyl-N-cyclohexyl-4-butoxy | 140 | 4 | 0 | 0 |
| N-butyl-N-cyclohexyl-4-hexyloxy | 128 | 4 | 0 | 0 |
| Santowhite® Powder (Note 1) | 73 | 1 | 1 | 0 |
| Santoflex® 13 (Note 2) | 163 | 7 | 8 | 9 |
| None (Control) | 77 | 1 | 0 | 0 |

For Notes 1 and 2 see Example 2

EXAMPLE 4

An alkoxyaniline, see Table 4, is mixed in different proportions with a commercial antidegradant (combined amount of alkoxyaniline and antidegradant : 3 phr) and this mixture was incorporated into masterbatch III as described above. Samples were vulcanised at 141 °C for a time which corresponds to $t'_c90$ in accordance with ISO 3417..

TABLE 4

| | | | | | | | | |
|---|---|---|---|---|---|---|---|---|
| N-butyl-N-cyclohexyl-4-ethoxyaniline | - | 3 | 2.9 | 2.8 | 2.7 | 2 | 1 | 0 |
| PPD (1) | - | 0 | 0.1 | 0.2 | 0.3 | 1 | 2 | 3 |
| Contact stain rating (UV 24h) | 0 | 0 | 1 | 1 | 2 | 4 | 6 | 8 |

(1) PPD = SANTOFLEX® 13 -- see Example 2 --.

The data in Table 4 illustrate that N-butyl-N-cyclohexyl-4-ethoxyaniline does not stain, but when used with more than 10% PPD the staining starts to become significant. The results clearly show that only very low levels, below about 10%, of a PPD antidegradant can be used without affecting, to a substantial extent, the vulcanisate, especially staining properties.

## Claims

**1.** A rubber composition containing a rubber and additives inclusive of performance and curing agents, characterised in that the composition comprises from 0.1 to 10 phr of a substituted alkoxyaniline having the general formula

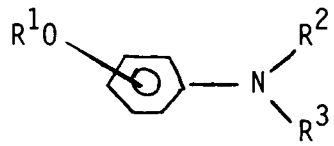

wherein $R^1O$ is an alkoxy substituent in the benzene nucleus, $R^1$, $R^2$ or $R^3$ is independently selected from straight or branched alkyl groups having from 1 to 20 carbon atoms, the chain of carbon atoms being possibly interrupted by ether or sulphide linkages, cycloalkyl and cycloalkenyl having from 4 to 8 carbon atoms, said cyclic structure optionally containing an oxygen atom in between two carbon atoms, alkenyls and alkynyls having from 2 to 20 carbon atoms in the chain structure, aralkyls containing 7 or more carbon atoms, or combinations thereof, with the proviso that when N,N'-substituted-p-phenylenediamine is present the level of such diamine represents less than 10% by weight of the sum of the amounts of the substituted alkoxyaniline and the phenylenediamine.

**2.** The composition in accordance with claim 1 wherein $R^1$ is an alkylgroup having from 1 to 6 carbon atoms or a benzyl group.

**3.** The composition in accordance with claim 1 wherein the alkoxyaniline is used in an amount of from 0.2 to 5 phr.

**4.** The composition in accordance with claim 1 wherein the alkoxy group is in para position to the amino group.

**5.** The composition in accordance with claim 4 wherein $R^2$ or $R^3$ is independently selected from an alkylgroup having from 1 to 6 carbon atoms, cyclohexyl and benzyl.

**6.** The composition in accordance with claims 2 and 5 wherein the alkoxyaniline is used in an amount of from 0.4 to 4 phr.

**7.** The composition in accordance with claims 2, 5, and 6 wherein the alkoxyaniline is selected from N-butyl-N-cyclohexyl-4-ethoxyaniline, N-ethyl-N-cyclohexyl-4-ethoxyaniline, N-butyl-N-1,3-dimethylbutyl-4-ethoxyaniline and N-butyl-N-1,3-dimethylbutyl-4-butoxyaniline.

European Patent Office

# EUROPEAN SEARCH REPORT

Application Number

EP 91 87 0131

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-1 941 691 (UNIVERSAL OIL)<br>* page 2, line 7 - page 3, line 8 *<br>* page 6, line 6 - page 7, line 8 *<br>* page 9, line 11 - page 10, line 6 *<br>* page 12, line 1 - line 9 *<br>* example 6 *<br>* claims 1,11 * | 1-6 | C08K5/18<br>C08L21/00 |
| A,D | & US-A-3 466 248 (UNIVERSAL OIL)<br>--- | 1-6 | |
| A | FR-A-2 323 730 (NEYNABER CHEMIE)<br>* page 3, line 24 - page 4, line 19 *<br>* claims 1,5 *<br>----- | 1-6 | |
| | | | TECHNICAL FIELDS SEARCHED (Int. Cl.5) |
| | | | C08K |

The present search report has been drawn up for all claims

| Place of search | Date of completion of the search | Examiner |
|---|---|---|
| THE HAGUE | 07 MAY 1992 | ENGEL S.L.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)